# EUROPÄISCHE PATENTSCHRIFT

(11) **EP 2 422 119 B1**
(45) Veröffentlichungstag und Bekanntmachung des Hinweises auf die Patenterteilung: **12.06.2013**
(21) Anmeldenummer: 10713563.4
(22) Anmeldetag: 25.03.2010
(51) Int. Cl.: F16K 5/06, F16K 5/20, F16L 37/36, G01N 1/10, G01N 1/22, G01N 1/02, G01N 1/20

(54) **VENTIL ZUR ENTNAHME EINER PROBE AUS EINEM INHALT EINES BEHÄLTERS**
VALVE FOR EXTRACTING A SAMPLE FROM A CONTENT OF A TANK
ROBINET DE PRÉLÈVEMENT D'ÉCHANTILLON DE CONTENU D'UN RÉSERVOIR

(30) Priorität: 24.04.2009 DE 102009018566
(43) Veröffentlichungstag der Anmeldung: 29.02.2012
(73) Patentinhaber: Andocksysteme G. Untch GmbH, 79410 Badenweiler (DE)
(72) Erfinder: UNTCH, Günter, 79379 Müllheim (DE)
(74) Vertreter: Patentanwälte Westphal, Mussgnug & Partner
(86) Internationale Anmeldenummer: PCT/EP2010/001880
(87) Internationale Veröffentlichungsnummer: WO 2010/121690

(56) Entgegenhaltungen:
- DE-A1- 3 932 202
- DE-A1- 4 316 734
- DE-U1- 8 808 536
- DE-U1- 20 109 525
- DE-U1- 29 606 649
- US-A- 5 922 972

## Beschreibung

Die Erfindung betrifft ein Ventil zur Entnahme einer Probe aus einem Inhalt eines Behälters, wie beispielsweise aus DE-A-39 32 202, DE-U-296 06 649 oder DE-A-43 16 734 bekannt.

In verfahrenstechnischen Anlagen unterschiedlicher Branchen und auch sonstigen Produktions-, Lagerungs- oder Transporteinrichtungen sind häufig Behälter vorgesehen, die eine Flüssigkeit, ein Gas oder ein Schüttgut enthalten. Oft sind die Behälter geschlossen oder die Behälter weisen nur eine kleine eventuell auch schwer zugängliche Öffnung auf. Die Inhalte sind dennoch aus diversen Gründen, beispielsweise Qualitätskontrolle oder sonstigen Analysen, in geringen Mengen aus den Behältern zu entnehmen. Solche geringe Mengen des Inhalts werden als Probe des Inhalts beispielsweise einem chemischen Labor zur Verfügung gestellt.

Bekannt sind Abflussschieber bzw. Probenahmeventile, die eine kurzzeitige Abzweigung aus dem Behälter oder einem Leitungssystem ermöglichen, ohne den darin ablaufenden Vorgang zu stören. Solch ein Abflussschieber ist beispielsweise aus der DE 31 09 350 A1 bekannt.

Ein kontaminationsfreies Probenahmesystem ist beispielsweise dann gefordert, wenn es sich bei den Inhalten der Behälter um gefährliche Stoffe handelt oder es sich bei den Inhalten der Behälter um besonders empfindliche Stoffe handelt, die selbst nicht verschmutzt werden dürfen.

Der Erfindung liegt das Problem zugrunde, ein Ventil zur Entnahme einer Probe oben beschriebener Art bereitzustellen, dass eine saubere Entnahme ermöglicht und die entnommene Probe um weltdicht verschlossen hält. Während der Entnahme darf dabei für die Probe und die Umwelt keine Kontaminationsgefahr bestehen.

Das Ventil soll ferner möglichst gut zu handhaben sein, sodass eine sichere Entnahme der Probe und ein sicherer Transport bei möglichst geringem Risiko und möglichst geringer Kraftanstrengung ermöglicht sind.

Dieses Problem wird erfindungsgemäß gelöst durch ein Ventil zur Entnahme einer Probe aus einem Inhalt eines Behälters mit den Merkmalen des Anspruchs 1.

Vorteilhafte Ausführungen der Erfindung sind in den Unteransprüchen angegeben.

Die Erfindung ermöglicht ein umweltdichtes bzw. kontaminationsfreies Entnehmen einer Probe aus einem Behälter mit einem Ventil, das wenigstens ein fest mit dem Behälter verbundenes Stationärteil, ein lösbar mit dem Stationärteil verbundenes Mobilteil und eine Betätigungseinrichtung zum Umschalten zwischen einer Grundstellung und einer Umschaltstellung aufweist.

Die Begriffe stationär und mobil bei der Bezeichnung des Stationärteils und des Mobilteils sind mit Bezug zu dem Bezugssystem gewählt, in dem auch der Behälter sich nicht bewegt. Bewegen sich dagegen Behälter und Stationärteil - sind diese also mobil - und steht beispielsweise dabei nur der Mobilteil in einem anderen Bezugssystem fest, sind die Begriffe stationär und mobil nicht als absolute Hinweise auf die tatsächliche Bewegungsfreiheit der Teile des Ventils zu verstehen.

Das Stationärteil lagert einen ersten Teilkörper eines im Wesentlichen um eine Achse rotationssymmetrischen Absperrkörpers rotierbar. Der erste Teilkörper weist dem Behälter abgewandt eine erste Trennfläche und dem Behälter zugewandt eine teilweise von dem Stationärteil kongruent aufgenommene, erste Oberfläche auf.

Das Mobilteil lagert einen zweiten Teilkörper des Absperrkörpers rotierbar. Der zweite Teilkörper weist der ersten Trennfläche des ersten Teilkörpers zugewandt eine zweite Trennfläche auf. Der ersten Trennfläche abgewandt weist der zweite Teilkörper eine mindestens teilweise von dem Mobilteil kongruent aufgenommene, zweite Oberfläche auf.

Der erste Teilkörper und/oder der zweite Teilkörper weist mindestens eine Ausnehmung auf. Die Ausnehmung weist entweder zur ersten Oberfläche oder zur zweiten Oberfläche hin mindestens eine Öffnung auf, um eine Fluidverbindung zwischen der Ausnehmung und dem Inhalt bzw. einem Gefäß herzustellen.

Das Mobilteil ist in einer angedockten Position derart an dem Stationärteil befestigt, dass der erste Teilkörper und der zweite Teilkörper jeweils in einem Bereich der Trennflächen oder zu den Trennflächen benachbart in Kontakt zueinander stehen. Dabei sind in vorteilhaften Ausführungsformen die Trennflächen gegeneinander abgedichtet, insbesondere durch einen Dichtring, der zwischen den Trennflächen beispielsweise in Ringnuten der Trennflächen angeordnet ist.

Der erste Teilkörper und der zweite Teilkörper sind somit gemeinsam mittels der Betätigungseinrichtung in dem Ventil rotierbar. Beim Rotieren bleibt eine Sperrfunktion des Absperrkörpers erhalten.

Vorteilhafterweise bleibt das mit dem Behälter verbundene Stationärteil auch unmittelbar nach dem Umschalten mittels der Betätigungseinrichtung nach außen weitgehend sauber. Wenn das Mobilteil von dem Stationärteil abgenommen ist, weist die erste Trennfläche des ersten Teilkörpers vom Behälter abgewandt nach außen. So kann weitgehend sicher keine Kontamination der Umwelt mit dem Inhalt und keine Kontamination des Inhalts selbst stattfinden. Es ist nicht notwendig, aber in vorteilhaften Ausführungsformen vorgesehen, dass das Stationärteil und das Mobilteil mit Deckeln verschließbar sind, wenn sie voneinander getrennt vorliegen.

Vorteilhafterweise ist die Ausnehmung des Absperrkörpers dazu ausgebildet, um die Probe in der Umschaltstellung aufzunehmen bzw. durchzuleiten. Dies ist immer gewährleistet, wenn der Inhalt in dem Behälter an dem Ventil ansteht. Wenn der Inhalt in dem Behälter nicht an dem Ventil ansteht, kann insbesondere durch die Ausnehmung eine Lanze von außen in den Inhalt des Behälters eingetaucht werden, um eine Probe zu entnehmen.

Die Ausnehmung befindet sich bevorzugt in dem Mobilteil, so dass die Ausnehmung nach jeder Entnahme einer Probe gereinigt werden kann, insbesondere in einem abgeschlossenen Reinigungssystem, in welches das komplette Mobilteil einsetzbar ist.

Als weiterer Vorteil ist zu nennen, dass das Prinzip eines Kugelventils nutzbar ist, um das Umschalten zwischen der Grundstellung und der Umschaltstellung besonders betriebssicher zu gewährleisten. Selbstverständlich sind erfindungsgemäße Ausführungsformen auch denkbar, die eine andere Form des Absperrkörpers zum Prinzip haben. So sind auch Platten, Kegel oder Kolben als Absperrkörper bekannt und in DIN EN 736-1 genormt.

Erfindungsgemäße Umsetzungen mit solchen alternativ eingesetzten Absperrkörpern fallen somit unter den Anspruch 1.

In einer vorteilhaften Ausführungsform bilden der erste Teilkörper und der zweite Teilkörper zwei Hälften eines Absperrkörpers.

Eine Teilung des Absperrkörpers in zwei Hälften und deren Weiterverarbeitung zur Aufnahme in dem Stationärteil bzw. dem Mobilteil ist für die Lagerung des Absperrkörpers in dem Ventil und auch aus Kostengründen bei der Fertigung des Absperrkörpers vorteilhaft gelöst.

In einer vorteilhaften Ausführungsform ist der Absperrkörper im Wesentlichen eine Kugel.

Die Kugel als Sonderform eines rotationssymmetrischen Körpers ist mit bekannten Vorteilen für eine Verwendung in Absperrventilen in verfahrenstechnischen Anlagen etabliert.

In einer vorteilhaften Ausführungsform sind Lagerzapfenhälften in axialer Richtung beidseits an den Absperrkörper angeformt oder an dem Absperrkörper befestigt.

Solche Lagerzapfenhälften, vorteilhaft als Zylinderzapfen ausgeführt, erleichtern eine Lagerung des jeweiligen Teilkörpers in dem Stationärteil bzw. dem Mobilteil. Ebenso ist eine drehfeste Verbindung zu der Betätigungseinrichtung mittels solcher rotationssymmetrischer Verlängerungen des Absperrkörpers besonders kostengünstig realisierbar. Dazu wird gegebenenfalls nur auf einer Seite des Körperteils eine Lagerzapfenhälfte benötigt.

In einer vorteilhaften Ausführungsform sind Lagerelemente in dem Stationärteil und dem Mobilteil vorgesehen. Die Lagerelemente lagern den ersten Teilkörper und den zweiten Teilkörper derart in dem entsprechenden Stationärteil bzw. dem Mobilteil, sodass mindestens in der Grundstellung die Teilkörper in dem Stationärteil bzw. dem Mobilteil festgehalten sind.

Diese Sicherung der Position der Teilkörper in dem Stationärteil bzw. dem Mobilteil ist unter den eingangs erwähnten Gründen der Sicherheit von Bedeutung. Gerade wenn vorgesehen ist, dass die entnommene Probe in einer Ausnehmung im Mobilteil transportiert wird, ist es wichtig, den zweiten Teilkörper fest im Mobilteil zu lagern, so dass der zweite Teilkörper nicht aus dem Mobilteil herausfallen kann.

In einer vorteilhaften Ausführungsform ist mindestens ein Teilkörper mittels einer Arretierung gegen ein unbeabsichtigtes Drehen gegenüber dem Stationärteil oder dem Mobilteil gesichert. Dazu weist das Stationärteil und / oder das Mobilteil eine Verriegelung und die Arretierung auf. Die Verriegelung verriegelt das Mobilteil mit dem Stationärteil und löst in Abhängigkeit davon, ob verriegelt ist oder nicht, mittelbar oder unmittelbar die Arretierung. Ein Lösen der Arretierung blockiert eine Drehung des jeweiligen Körperteils oder gibt die Drehung frei.

Daran ist vorteilhaft, dass nicht durch ein Versehen oder einen Irrtum eine Rotation der Teilkörper stattfinden kann, beispielsweise ohne dass das Stationärteil mit dem Mobilteil verbunden ist.

In einer vorteilhaften Ausführungsform besteht das Stationärteil und/oder das Mobilteil mindestens teilweise aus Kunststoff.

Neben Vorteilen einer kostengünstigen Herstellung solcher Teile aus Kunststoff ist die Materialwahl auch von Vorteil im Hinblick auf Korrosion oder Reaktion verursacht durch die Inhalte der Behälter. Die Haltbarkeit des Ventils kann demnach auf diese Art und Weise gegenüber Ventilen aus Metallen erhöht sein.

In einer vorteilhaften Ausführungsform erstreckt sich die Ausnehmung als ein Sackloch, insbesondere als ein zylindrisches Sackloch, von der radial äußeren Oberfläche des jeweiligen Teilkörpers etwa senkrecht zu der Achse für die Rotation des Teilkörpers radial einwärts in den jeweiligen Teilkörper hinein.

In einer solchen Ausnehmung ist eine nach außen abgedichtete Probenahme gewährleistet. Ein weiterer Vorteil ist, dass solche Sacklöcher leicht zu fertigen und leicht zu reinigen sind.

In einer vorteilhaften Ausführungsform ist in der Ausnehmung ein Auswerfer vorgesehen. Ist die Ausnehmung als Sackloch gestaltet, kann der Auswerfer beispielsweise eine dicke Scheibe oder ein kurzer Zylinder sein. Der Auswerfer ist in der Ausnehmung bewegbar, um eine entnommene Probe auszuwerfen.

Vorteilhaft ist ein solcher Auswerfer, wenn die Probe nicht von alleine aus der Ausnehmung fällt, sondern darin festhängt. Dann ist eine nahezu vollständige Entfernung der Probe aus der Ausnehmung mit dem Auswerfer möglich und die Probe muss nicht mit weiteren Hilfsmitteln aus der Ausnehmung entnommen werden.

In einer vorteilhaften Ausführungsform verläuft die Ausnehmung als eine durchgehende Bohrung durch einen der Teilkörper, wobei der Verlauf etwa senkrecht zur Achse für die Rotation des Absperrkörpers und etwa parallel zu einer Trennebene des Absperrkörpers zwischen den Trennflächen der Teilkörper ausgebildet ist.

Eine solche Form der Ausnehmung ermöglicht vorteilhaft eine Beprobung durch den Absperrkörper hindurch. Dies kann insbesondere dann nötig sein, wenn der Füllstand des Behälters zu niedrig ist, sodass der Inhalt mit seiner Füllhöhe in dem Behälter das Ventil nicht übersteigt. Dann muss beispielsweise von außen in den Behälter eingegriffen werden können. Dies geschieht vorteilhaft kontrolliert und abgedichtet durch die Bohrung hindurch.

Das Mobilteil und / oder das Stationärteil weist in einer vorteilhaften Ausführungsform eine Absaugung auf. Mittels der Absaugung ist Luft und Schüttgut aus einem Bereich zwischen dem Mobilteil und dem Stationärteil weitgehend entfernbar.

Sollte während dem Umschalten zwischen Grundstellung und Umschaltstellung Schüttgut aus dem Inhalt des Behälters zwischen die Teilkörper geraten, wären die Trennflächen kontaminiert. Durch eine solche Absaugung wird der Bereich vor oder während des Trennens gereinigt.

In einer vorteilhaften Ausführungsform weist das Mobilteil dem Stationärteil abgewandt eine Befestigungseinrichtung auf. Die Befestigungseinrichtung ist dabei mit einer Entnahmeeinrichtung verbindbar.

Besonders vorteilhaft ist es auf diese Art und Weise gelöst, beispielsweise Probenahmebehältnisse mit dem Mobilteil zu verbinden. Weiterhin kann die Entnahmeeinrichtung ein Gefäß aufweisen oder selbst als solches ausgebildet sein.

Als Probenahmebehältnisse können Entnahmeeinrichtungen zur Aufnahme von Probenahmelanzen dienen. Solche Lanzen dringen in das Innere des Behälters ein, entnehmen eine Probe und werden mit der Probe aus dem Behälter entfernt. In vorteilhaft komplett geschlossenen Lanzenführungen ist dies insbesondere durch Teleskopführungen und/oder einen Abschluss mit einem Faltenbalg realisiert.

Das Mobilteil und oder das Stationärteil weist gemäß einer weiteren vorteilhaften Ausführungsform ein Druckventil auf. Mittels des Druckventils ist ein Druckausgleich zwischen der Ausnehmung und / oder der Entnahmeeinrichtung auf der einen Seite und der Umwelt auf der anderen Seite bewirkbar.

Somit ist es dem Anwender möglich, die Probe, die möglicherweise nach der Probenahme unter Unter- oder Überdruck steht, zu be- oder entlüften, um ihm die Probe kontrolliert zugänglich zu machen.

Das erfindungsgemäße Ventil wird besonders vorteilhaft in verfahrenstechnischen Anlagen verwendet.

Im Folgenden wird die Erfindung in zwei Ausführungsbeispielen näher erläutert. Es zeigen:
- Figur 1: eine perspektivische Ansicht eines Ventils gemäß einem ersten Ausführungsbeispiel, wobei ein Mobilteil bereits gegenüber einem Stationärteil ausgerichtet ist und von dem Stationärteil beabstandet, also noch nicht angedockt, bereitsteht,
- Figur 2: ein Schnitt durch das Ventil aus Figur 1 entlang einer Achse A,
- Figur 3: ein Schnitt durch das Ventil aus Figur 2, wobei das Mobilteil an dem Stationärteil angedockt ist und ein Absperrkörper mittels einer Betätigungseinrichtung um die Achse A in eine Umschaltstellung gedreht ist,
- Figur 4: ein Schnitt durch das Ventil aus Figur 3, wobei der Absperrkörper mittels der Betätigungseinrichtung in eine Grundstellung gedreht ist,
- Figur 5: ein Schnitt durch ein Ventil gemäß einem zweiten Ausführungsbeispiel, wobei der Schnitt senkrecht durch die Achse A des Absperrkörpers verläuft,
- Figur 6: ein Schnitt durch das Ventil aus Figur 5, wobei im Unterschied zur Figur 5 das Mobilteil in der Grundstellung an dem Stationärteil angedockt ist, und
- Figur 7: ein Schnitt durch das Ventil aus Figur 6, wobei der Absperrkörper mittels der Betätigungseinrichtung in die Umschaltstellung gedreht ist.

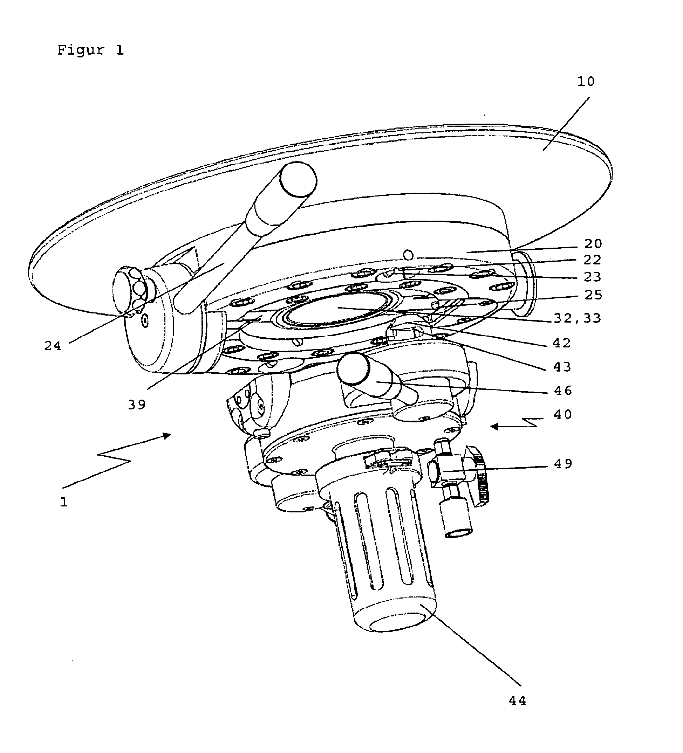

In den Figuren 1 bis 4 ist ein erstes Ausführungsbeispiel des erfindungsgemäßen Ventils 1 dargestellt. Das Ventil 1 besteht aus einem Stationärteil 20 und einem Mobilteil 40.

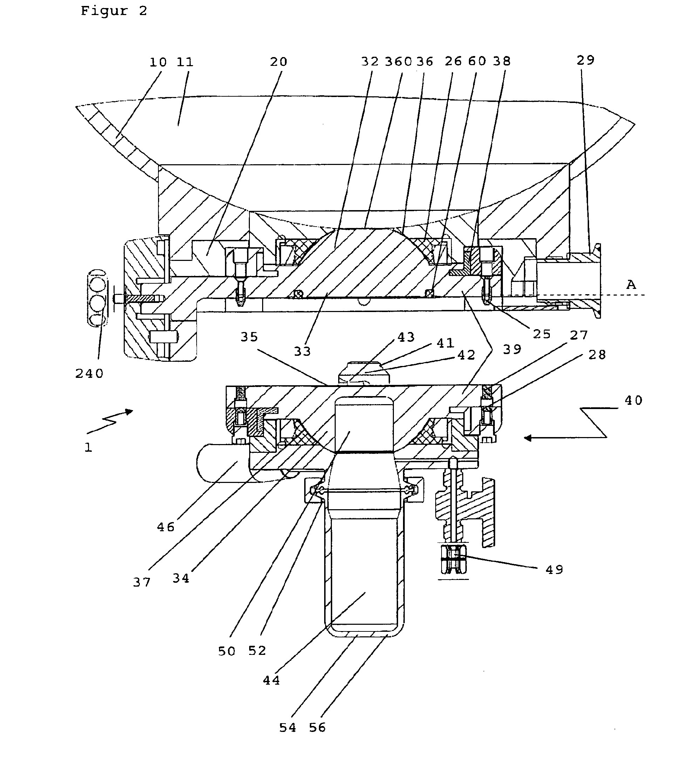

In den Figuren 1 und 2 ist das Mobilteil 40 gegenüber dem Stationärteil 20 ausgerichtet, jedoch von dem Stationärteil 20 beabstandet dargestellt.

Das Stationärteil 20 ist an einem Behälter 10 befestigt und verschließt den Behälter 10 mit einem Teilkörper 32 eines Absperrkörpers 30 nach außen. Der Teilkörper 32 ist über Lagerzapfenhälften 39 mit einer Betätigungseinrichtung 24 verbunden und gemeinsam mit den Lagerzapfenhälften 39 drehbar in dem Stationärteil 20 gelagert. Die Betätigungseinrichtung 24 ist als ein Hebelarm realisiert, der seitlich an dem Stationärteil 20 angebracht ist. Somit besteht eine drehfeste Verbindung zwischen der Betätigungseinrichtung 24 über die Lagerzapfenhälften 39 zu dem absperrenden ersten Teilkörper 32.

Der erste Teilkörper 32 ist in dem Stationärteil 20 um eine Achse A drehbar gelagert. Dazu greifen Lagerelemente 38 des Stationärteils 20 in den ersten Teilkörper 32 ein, sodass der erste Teilkörper 32 nicht aus dem Stationärteil 20 herausfallen kann.

Der erste Teilkörper 32 weist dem Behälter 10 zugewandt eine erste Oberfläche 36 auf. Die erste Oberfläche 36 ist wenigstens teilweise vollflächig von einer kongruenten Oberfläche des Stationärteils 20 aufgenommen bzw. gestützt. Die kongruente Oberfläche ist der Oberfläche 36 zugewandt auf einer ringförmig in das Stationärteil 20 eingesetzten Dichtung 26 ausgeführt. Die Aufnahme der Oberfläche 36 auf der Dichtung 26 ist derart ausgebildet, dass der Absperrkörper 30 den Behälter 10 gegenüber der Umwelt sicher abdichtet.

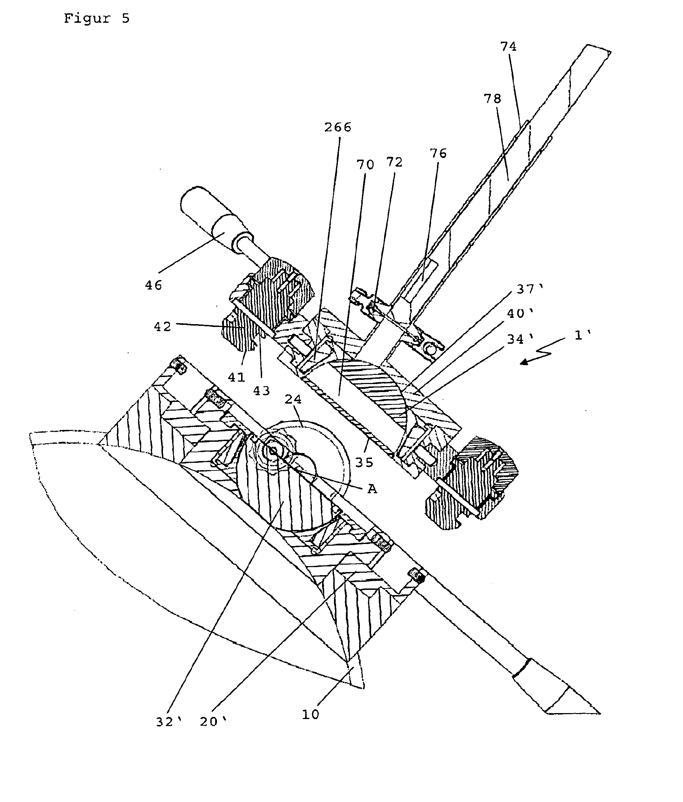

Die Dichtung 26 ist als eine gekapselte Dichtung ausgeführt. In Figur 5 ist der Aufbau der Dichtung 26 in einem Querschnitt dargestellt.

Radial innen schmiegt sich die Dichtung 26 mit einer Lippe 262 zwischen den ersten Teilkörper 32 und das Stationärteil 20. Dazu ist die Lippe 262, wie die gesamte Kapselung 264 um einen Kern 266 der Dichtung 26 aus Polytetrafluorethylen (PTFE) gefertigt. Der Kern 266 im Inneren der Kapselung 264 besteht aus einem beliebigen Elastomer.

Der erste Teilkörper 32 weist dem Behälter 10 zugewandt in der ersten Oberfläche 36 eine Mulde 360 als eine weitere Ausnehmung auf. Die Form der Mulde 360 entspricht etwa der Wölbung des Behälters 10. Ein Rührwerk des Behälters 10, das an dessen Wandung vorbeistreift, streift somit in der Grundstellung ungehindert auch an der Mulde 360 vorbei. Durch die Mulde 360 entsteht ein minimaler Totraum. In einem solchen Totraum wird beim Umschalten zwischen der Grundstellung in die Entnahmestellung eine geringe Menge des Inhalts 11 in das Innere des Ventils 1, 1' mitgenommen, was zu Verschmutzungen führen kann. Diese Mitnahme ist auch als eine erste Entnahme einer Probe zu verstehen, weil die Mulde 360 sich in der Umschaltstellung über einem Gefäß befinden kann, wenn das Betätigungselement 24 eine Drehung um 180° bewirkt hat.

Bei totraumarmen Varianten ist keine Mulde in der ersten Oberfläche ausgeführt. Um dann ein freies Drehen eines Rührers nicht zu stören, wird der Sperrkörper behälterauswärts im Ventil zurückgesetzt.

Dem Behälter 10 abgewandt weist der erste Teilkörper 32 eine erste Trennfläche 33 auf. Die erste Trennfläche 33 ist kongruent zur Teilungsebene des kugelförmigen Absperrkörpers 30 ausgebildet. Trennflächen können alternativ auch von der Trennebene abweichend, insbesondere zurückweichend ausgeführt sein. Dann entsteht gegebenenfalls zwischen solchen Trennflächen ein Hohlraum. Je nach Arbeitsumgebung kann ein solcher Hohlraum für die Betriebssicherheit notwendig sein, da sonst Störungen beim Verschluss zu erwarten sind. Auch kann durch solche Trennflächengestaltungen Gewicht eingespart werden.

Das Mobilteil 40 lagert in ähnlicher Art und Weise einen zweiten Teilkörper 34 des Absperrkörpers 30. Der zweite Teilkörper 34 liegt in der Darstellung der Figuren 1 und 2 dem ersten Teilkörper 32 gegenüber und ist diesem zugewandt. Der zweite Teilkörper 34 ist ähnlich dem ersten Teilkörper 32 ausgebildet. Der zweite Teilkörper 34 unterscheidet sich von dem ersten Teilkörper 32 durch eine Ausnehmung 50. Die Ausnehmung 50 ist als zylindrisches Sackloch senkrecht zur Achse A und senkrecht zu der Teilungsebene des Absperrkörpers 30 ausgeführt.

Da in den Figuren 1 und 2 das Mobilteil 40 noch nicht an dem Stationärteil 20 angedockt dargestellt ist, befindet sich das Ventil 1 selbstverständlich auch noch in der Grundstellung. In der Grundstellung ist die Ausnehmung 50 dem Behälter 10 abgewandt nach außen offen. Diese Öffnung besteht gegenüber einem Gefäß 44 derart, dass zwischen der Ausnehmung 50 und dem Gefäß 44 eine umweltdichte Verbindung ausgebildet ist. Dies ist durch eine Entnahmeeinrichtung 54 gewährleistet, die dem Stationärteil 20 abgewandt an dem Mobilteil 40 befestigt ist.

Die Teilkörper 32, 34 sind mittels mindestens einer Arretierung 28 gegen ein unbeabsichtigtes Drehen gegenüber dem Stationärteil 20 oder dem Mobilteil 40 gesichert.

Daran ist vorteilhaft, dass nicht durch ein Versehen oder einen Irrtum eine Rotation der Teilkörper 32, 34 stattfinden kann, ohne dass das Stationärteil 20 mit dem Mobilteil 40 verbunden ist.

Für die Befestigung des Mobilteils 40 an dem Stationärteil 20 sind einander gegenüberliegend zwei Verriegelungen 42 vorgesehen, die gemäß diesem Ausführungsbeispiel nach dem Prinzip eines Bajonettverschlusses funktionieren. Die Verriegelung 42 weist einen drehbaren, angespitzten Zylinder auf, der mit einem konisch zulaufenden Ende 41 in ein entsprechendes Aufnahmeloch 22 des Stationärteils 20 eindringt. Dabei wird das Mobilteil 40 gegenüber dem Stationärteil 20 grob ausgerichtet, sodass ein Fangbereich eines Zentriernippels 25 erreicht ist. Der Zylinder der Verriegelung 42 weist eine L-förmige Nut 43 auf, die mit einem ersten Schenkel des L's einen Teil seines Umgangs umschließt und an einer Stelle des Umgangs mit einem zweiten Schenkel des L's in Richtung der Zylinderachse weist und zu dem Ende 41 hin offen ist. Dringt der Zylinder in das Aufnahmeloch 22 ein, versinkt ein in dem Aufnahmeloch 22 angeformter Zapfen 23 in der Nut 43. Sitzt das Mobilteil 40 auf dem Stationärteil 20 zentriert auf, sind die Zentriernippel 25 in entsprechende Aufnahmen eingetaucht und kann der Zylinder gedreht werden. Dies geschieht hier als eine vieler Möglichkeiten mit einem Hebel 46, der drehfest mit dem Zylinder verbunden ist. Der Zapfen 23 befindet sich nach einer Drehung des Zylinders in einem Bereich der Nut 43, in dem die Nut 43 dem Zapfen 23 in axialer Richtung des Zylinders keine Bewegungsfreiheit lässt.

Erst wenn das Mobilteil 40 mit dem Stationärteil 20 mittels der Verriegelung 42 verriegelt ist, kann das Betätigungselement 24 gedreht werden.

Auslöser für die Entriegelung bzw. das Lösen des Betätigungselements 24 bzw. der Lagerzapfenhälften 39 nach Verriegelung 42 des Mobilteils 40 mit dem Stationärteil 20 sind die Zentriernippel 25. Sie stehen in Verbindung zu Stiften 27, die eine Arretierung 28 aus den Lagerzapfenhälften 39 in radialer Richtung hinausdrücken können. Ohne den durch die Stifte 27 übertragenen Druck ist die Arretierung 28 in die Lagerzapfenhälften 39 eingefahren, sodass sich die Lagerzapfenhälften 39 nicht in dem Mobilteil 40 drehen können. Analog sind in nicht dargestellten Ausführungsbeispielen die Lagerzapfenhälften 39 des Stationärteils 20 arretierbar.

Die Drehung des Betätigungselements 24 wird durch eine Drehkontrolleinrichtung 240 derart kontrolliert, dass eine Freigabe für die Entriegelung nur bei vollständiger Drehung des Betätigungselements 24 in die Umschaltstellung um etwa 90° oder um 180° erfolgt. Ebenso erkennt die Drehkontrolleinrichtung 240 die vollständige Drehung um etwa 90° oder 180° zum Erreichen einer Umschaltstellung, sodass ein "Entnahme-erfolgt-Signal" ausgegeben werden kann. Die Entnahme ist somit vollständig automatisierbar. Die Drehungen um etwa 90° zum Erreichen einer Umschaltstellung bezieht sich auf das zweite Ausführungsbeispiel mit der Ausnehmung 70, mit der dann eine Entnahme möglich ist, insbesondere bei Drehungen um etwas mehr als 90°.

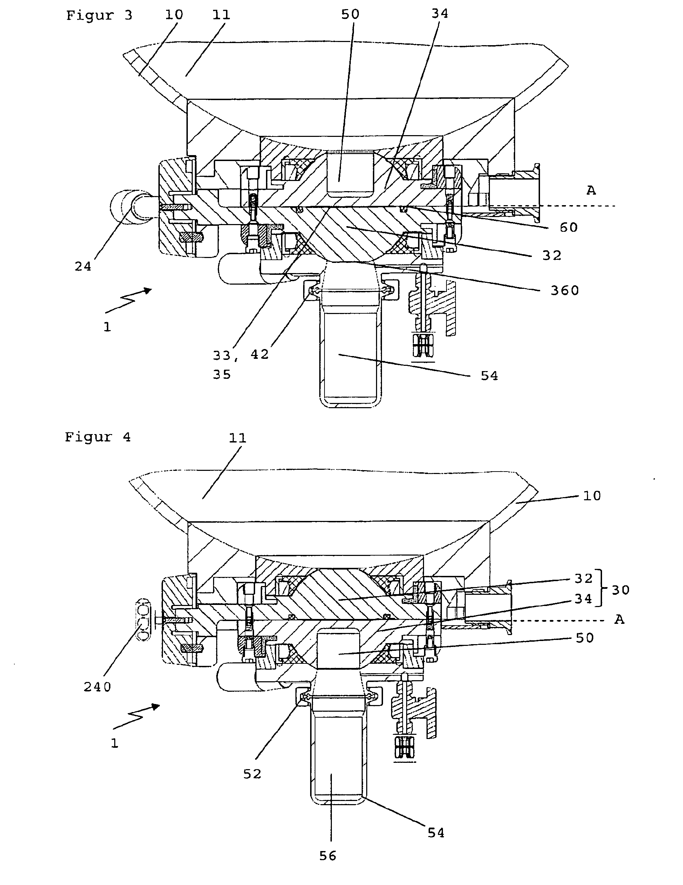

In den Figuren 3 und 4 ist das Ventil 1 in einer angedockten Position des Mobilteils 40 an dem Stationärteil 20 dargestellt.

Figur 3 stellt das erste Ausführungsbeispiel des Ventils 1 in der Umschaltstellung dar. Eine Drehung des nun aus den Teilkörpern 32, 34 zusammengeführten Absperrkörpers 30 mittels der Betätigungseinrichtung 24 um die Achse A bewirkt ein Umschalten in eine Grundstellung, wie sie in Figur 4 dargestellt ist. Jetzt ist die Probe aus der Ausnehmung 50 entnehmbar.

Die Teilkörper 32, 34 stehen mit nahezu sauberen Trennflächen 33, 35 in Kontakt zueinander. Um sicherzustellen, dass es während des Umschaltens zwischen der Grundstellung und der Umschaltstellung nicht zu einer Kontamination der Trennflächen 33, 35 kommt, ist zwischen den Teilkörper 32, 34 ein Dichtring 60 vorgesehen.

Nach einer Entnahme einer Probe ist in der Regel das Mobilteil 40 von dem Stationärteil 20 zu trennen. Dazu wird die Verriegelung 42 gelöst. Dies sollte jedoch je nach Kontaminationsgefahr nicht geschehen, ohne dass eine Absaugung 29 in Richtung der Trennebene des geteilten Absperrkörpers 30 durch den Absperrkörper 30 hindurch eingeschaltet ist. Eine solche Absaugung 29 kann als Rohrabsaugung ausgeführt sein, die an bestehende Vakuumsysteme angeschlossen ist.

Das Gefäß 44 und das Mobilteil 40 stehen je nach Art der Probenahme unter Über- oder Unterdruck. Vor dem Öffnen des Gefäßes 44 der Entnahmeeinrichtung 54 ist somit ein Druckausgleich gegenüber einem Normaldruck herzustellen. Dazu ist ein Druckventil 49 vorgesehen, das eine Fluidverbindung des Gefäßes oder der Ausnehmung zur Umwelt öffnet und schließt.

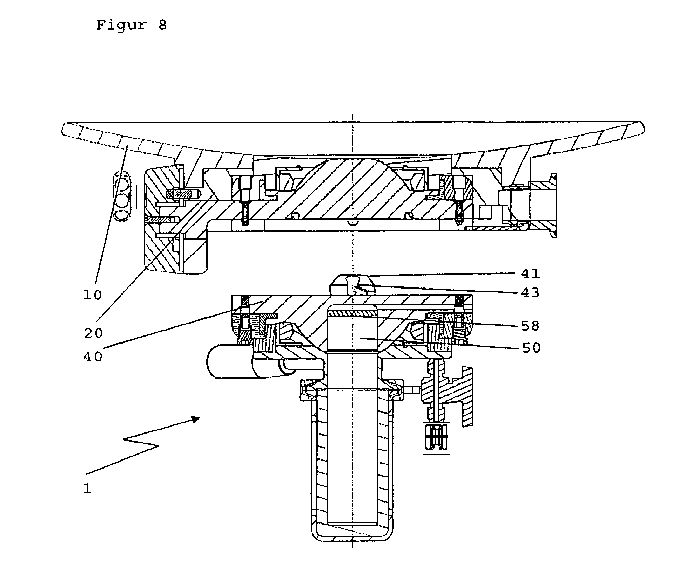

Die entnommene Probe muss nach Entnahme von der Ausnehmung 50 in das Gefäß 44 fallen oder fließen. Für viele Fälle von Schüttgütern besteht hierbei kein Problem. Häufig handelt es sich bei den Schüttgütern jedoch um zähes, klebriges oder klumpiges Material, das nicht ohne Weiteres aus der Ausnehmung 50 fällt. In Figur 8 ist das erste Ausführungsbeispiel für solche Problemfälle mit einem Probenauswurf aus der Ausnehmung 50 vorgesehen. Dazu ist eine axial in der Ausnehmung 50 bewegliche Scheibe 58 vorgesehen. Soll eine Probe aus der Ausnehmung 50 ausgeworfen werden, bewegt sich die Scheibe 58 senkrecht zur Achse A zum Gefäß 44 hin. Dies kann auf verschiedene Art und Weise bewirkt werden. Beispielsweise ist eine Druckbeaufschlagung des Bereichs auf einer der Probe abgewandten Seite der Scheibe 58 denkbar, so dass eine pneumatische Ansteuerung der Scheibe 58 realisiert ist.

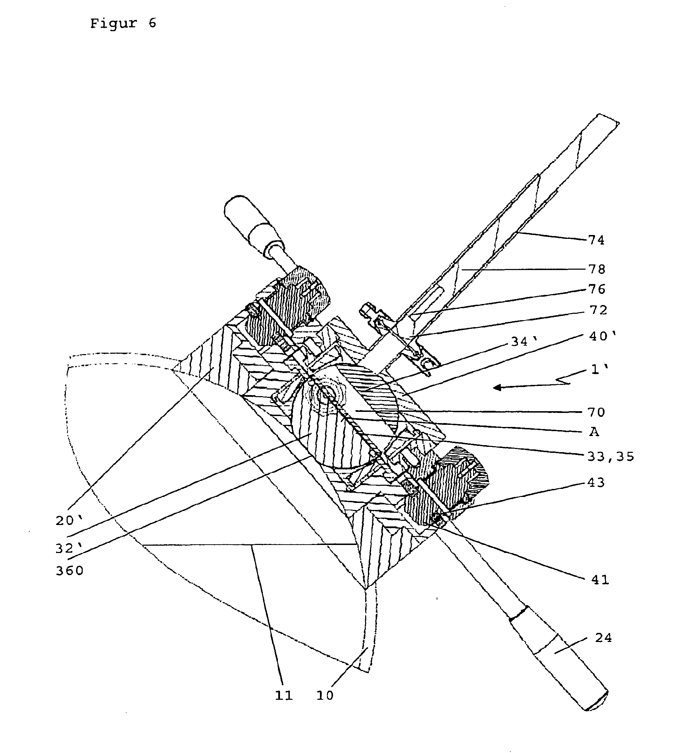

In den Figuren 5 bis 7 ist ein zweites Ausführungsbeispiel eines erfindungsgemäßen Ventils 1' dargestellt. Es handelt sich bei den Figuren 5 bis 7 um Schnittdarstellungen senkrecht zur Achse A. Das Stationärteil 20' und das Mobilteil 40' sind im Wesentlichen vergleichbar dem ersten Ausführungsbeispiel aufgebaut. Der wesentliche Unterschied zwischen dem Ventil 1 und dem Ventil 1' besteht in der Ausnehmung 50, 70 in dem zweiten Teilkörper des Absperrkörpers 30, 30'.

Die Ausnehmung 70 ist gemäß dem zweiten Ausführungsbeispiel (Figuren 5 bis 7) als durchgehende Bohrung durch den zweiten Teilkörper 34' des Absperrkörpers 30' ausgeführt. Die Bohrung liegt parallel zur zweiten Trennfläche 35 und senkrecht zur Achse A. Eine Drehung des Sperrkörpers 30' um die Achse A verlagert die Ausnehmung 70 mit ihren Öffnungen in der Oberfläche 37' derart, dass in der Entnahmestellung eine der Öffnungen zum Behälter 10 offen ist und die andere der Öffnungen eine Fluidverbindung mit einer Entnahmeeinrichtung 74 herstellt.

Die Entnahmeeinrichtung 74 nimmt dem Behälter 10 abgewandt eine Lanze 78 auf. Die Lanze 78 ist dicht in der Entnahmeeinrichtung 74 geführt, so dass bei hergestellter Fluidverbindung zum Inhalt 11 des Behälters 10 dennoch insgesamt ein geschlossenes System vorliegt. Die Lanze 78 weist dem Behälter 10 zugewandt eine Aussparung auf, die als ein Gefäß 76 für die entnommene Probe vorgesehen ist.

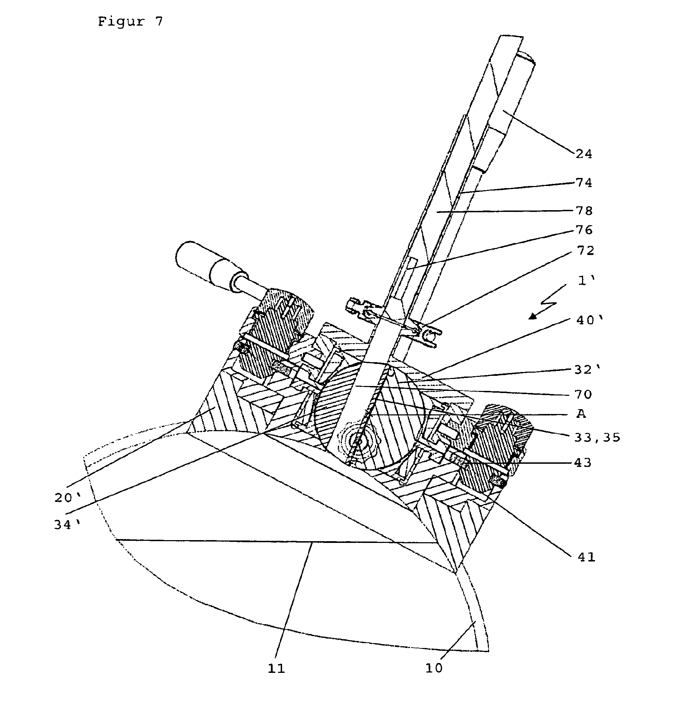

In der Entnahmeposition (Figur 7) kann die Lanze 78 durch die Ausnehmung 70 hindurch in den Behälter 10 und dessen Inhalt 11 hineinstoßen. Nach Entnahme einer Probe wird die Lanze 78 in der Entnahmeeinrichtung 74 zurückgezogen, so dass der Absperrkörper 30' wieder frei drehbar ist. Der Absperrkörper 30' wird in eine Grundstellung gedreht, so dass die erste Trennfläche 33 dem Mobilteil 40' zugewandt und der Behälter 10 wieder dicht verschlossen ist.

### Bezugszeichenliste

| | |
|---|---|
| 1, 1' | Ventil |
| | |
| 10 | Behälter |
| 11 | Inhalt |
| | |
| 20, 20' | Stationärteil |
| 22 | Aufnahmeloch |
| 23 | Zapfen |
| 24 | Betätigungseinrichtung |
| 25 | Zentriernippel |
| 26 | Dichtung |
| 27 | Stift |
| 28 | Arretierung |
| 29 | Absaugung |
| | |
| 30, 30' | Absperrkörper |
| 32, 32' | erster Teilkörper |
| 33 | erste Trennfläche |
| 34, 34' | zweiter Teilkörper |
| 35 | zweite Trennfläche |
| 36 | erste Oberfläche |
| 37, 37' | zweite Oberfläche |
| 38 | Lagerelement |
| 39 | Zylinderhälfte |
| | |
| 40, 40' | Mobilteil |
| 41 | Ende |
| 42 | Verriegelung |
| 43 | Nut |
| 44 | Gefäß |
| 46 | Hebel |
| 49 | Druckventil |
| | |
| 50 | Ausnehmung |
| 52 | Befestigungseinrichtung |
| 54 | Entnahmeeinrichtung |
| 56 | Gefäß |
| 58 | Scheibe |
| | |
| 60 | Dichtring |
| | |
| 70 | Ausnehmung |
| 72 | Befestigungseinrichtung |
| 74 | Entnahmeeinrichtung |
| 76 | Gefäß |
| 78 | Lanze |
| | |
| 240 | Drehkontrolleinrichtung |
| | |
| 262 | Lippe |
| 264 | Kapselung |
| 266 | Kern |
| | |
| 360 | Mulde |
| | |
| A | Achse |

## Patentansprüche

1. Ventil (1, 1') zur Entnahme einer Probe aus einem Inhalt (11) eines Behälters (10)
1.1 mit einem fest mit dem Behälter (10) verbindbaren Stationärteil (20, 20'),
1.1.1 wobei das Stationärteil (20, 20') einen ersten Teilkörper (32, 32') eines im Wesentlichen um eine Achse (A) rotationssymmetrischen Absperrkörpers (30, 30') rotierbar lagert
1.1.2 und der erste Teilkörper (20, 20') dem Behälter (10) abgewandt eine erste Trennfläche (33)
1.1.3 und dem Behälter (10) zugewandt eine teilweise von dem Stationärteil (20, 20') kongruent aufgenommene, erste Oberfläche (36) aufweist,
1.2 mit einem lösbar mit dem Stationärteil (20, 20') verbundenen Mobilteil (40, 40'),
1.2.1 wobei das Mobilteil (40, 40') einen zweiten Teilkörper (34, 34') des Absperrkörpers (30, 30') rotierbar um die Achse (A) lagert
1.2.2 und der zweite Teilkörper (34, 34') der ersten Trennfläche (33) zugewandt eine zweite Trennfläche (35)
1.2.3 und der ersten Trennfläche (33) abgewandt eine mindestens teilweise von dem Mobilteil (40, 40') kongruent aufgenommene, zweite Oberfläche (37, 37') aufweist,
1.3 und wobei der erste Teilkörper (32, 32') und/oder der zweite Teilkörper (34) mindestens eine Ausnehmung (50, 70, 360) aufweist, die entweder zur ersten Oberfläche (36) oder zur zweiten Oberfläche (37) hin mindestens eine Öffnung aufweist, um eine Fluidverbindung zwischen der Ausnehmung (50, 70, 360) und dem Behälter (10) herzustellen,
1.4 und mit einer Betätigungseinrichtung (24) zum Umschalten zwischen einer Grundstellung und einer Umschaltstellung.

2. Ventil (1, 1') nach Anspruch 1,
**dadurch gekennzeichnet, dass**
der erste Teilkörper (32, 32') und der zweite Teilkörper (34, 34') in einem Bereich der Trennflächen (33, 35) oder zu den Trennflächen (33, 35) benachbart in Kontakt zueinander stehen, insbesondere einander abdichtend, besonders bevorzugt mittels eines Dichtrings (60).

3. Ventil (1, 1') nach einem der Ansprüche 1 oder 2,
**dadurch gekennzeichnet, dass**
der erste Teilkörper (32, 32') und der zweite Teilkörper (34, 34') zwei Hälften des Absperrkörpers (30, 30') bilden.

4. Ventil (1, 1') nach einem der vorangehenden Ansprüche,
**dadurch gekennzeichnet, dass**
der Absperrkörper (30, 30') im Wesentlichen eine Kugel ist.

5. Ventil (1, 1') nach einem der vorangehenden Ansprüche,
**dadurch gekennzeichnet, dass**
Lagerzapfenhälften (39) in axialer Richtung (A) beidseits an den Absperrkörper (30, 30') angeformt oder an dem Absperrkörper (30, 30') befestigt sind.

6. Ventil (1, 1') nach einem der vorangehenden Ansprüche,
**dadurch gekennzeichnet, dass**
Lagerelemente (38) in dem Stationärteil (20, 20') und dem Mobilteil (40, 40') vorgesehen sind, die den ersten Teilkörper (32, 32') und den zweiten Teilkörper (34, 34') derart in dem Stationärteil (20, 20') und dem Mobilteil (40, 40') lagern, dass mindestens in der Grundstellung die Teilkörper (32, 32'; 34, 34') in dem Stationärteil (20, 20') bzw. dem Mobilteil (40, 40') gehalten sind.

7. Ventil (1, 1') nach Anspruch 6,
**dadurch gekennzeichnet, dass**
die Lagerelemente (38) als Buchsensegmente mit L-förmigem Querschnitt ausgeführt sind, die mit ringsegmentförmig ausgebildeten Nuten der Teilkörper (32, 34) korrespondieren.

8. Ventil (1, 1') nach einem der vorangehenden Ansprüche,
**dadurch gekennzeichnet, dass**
das Stationärteil (20, 20') und/oder das Mobilteil (40, 40') eine Verriegelung (42) und eine Arretierung (28) aufweisen, wobei die Verriegelung (42) das Mobilteil (40, 40') mit dem Stationärteil (20, 20') verriegelt und die Arretierung (28) eine Drehung des Absperrkörpers (30, 30') blockiert oder freigibt und wobei die Verriegelung (42) die Verriegelung (42) die Arretierung (28) mittelbar, insbesondere mittels Stiften (27), oder unmittelbar blockiert oder freigibt.

9. Ventil (1, 1') nach einem der vorangehenden Ansprüche,
**dadurch gekennzeichnet, dass**
der Stationärteil (20, 20') und/oder der Mobilteil (40, 40') mindestens teilweise aus Kunststoff besteht.

10. Ventil (1, 1') nach einem der vorangehenden Ansprüche,
**dadurch gekennzeichnet, dass**
die Ausnehmung (50) ein insbesondere zylindrisches Sackloch ist, das sich von der radial äußeren Oberfläche (36, 37) etwa senkrecht zu der Achse (A) radial einwärts in den jeweiligen Teilkörper (32, 32'; 34, 34') hinein erstreckt.

11. Ventil (1, 1') nach einem der vorangehenden Ansprüche,
**dadurch gekennzeichnet, dass**
die Ausnehmung (50) einen Auswerfer, insbesondere in Form einer Scheibe (58), aufweist, wobei der Auswerfer in der Ausnehmung (50) bewegbar ist, um eine entnommene Probe auszuwerfen.

12. Ventil (1, 1') nach einem der vorangehenden Ansprüche,
**dadurch gekennzeichnet, dass**
die Ausnehmung (70) als eine durchgehende Bohrung durch einen der Teilkörper (32, 32'; 34, 34') ausgeführt ist, die etwa senkrecht zur Achse (A) und etwa parallel zu einer der Trennflächen (33, 35) verläuft.

13. Ventil (1, 1') nach einem der vorangehenden Ansprüche,
**dadurch gekennzeichnet, dass**
das Mobilteil (40, 40') und oder das Stationärteil (20, 20') eine Absaugung (29) aufweist, wobei mittels der Absaugung (29) Luft und Schüttgut aus einem Bereich zwischen dem Mobilteil (40, 40') und dem Stationärteil (20, 20') weitgehend entfernbar ist.

14. Ventil (1, 1') nach einem der vorangehenden Ansprüche,
**dadurch gekennzeichnet, dass**
das Mobilteil (40, 40') dem Stationärteil (20, 20') abgewandt eine Befestigungseinrichtung (52, 72) aufweist, wobei die Befestigungseinrichtung (52, 72) mit einer Entnahmeeinrichtung (54, 74) verbindbar ist.

15. Ventil (1, 1') nach Anspruch 14,
**dadurch gekennzeichnet, dass**
die Entnahmeeinrichtung (54, 74) ein Gefäß (56, 76) aufweist.

16. Ventil (1, 1') nach einem der vorangehenden Ansprüche,
**dadurch gekennzeichnet, dass**
das Mobilteil (20, 20') ein Druckventil (49) aufweist, wobei mittels des Druckventils (49) ein Druckausgleich zwischen der Ausnehmung (50) und / oder der Entnahmeeinrichtung (54, 74) und der Umwelt bewirkbar ist.

17. Verwendung eines Ventils nach einem der vorangehenden Ansprüche in verfahrenstechnischen Anlagen.

## Claims

1. Valve (1, 1') for removing a sample from a content (11) of a container (10)
1.1 comprising a stationary part (20, 20') which can be rigidly connected to the container (10),
1.1.1 wherein the stationary part (20, 20') rotatably mounts a first partial body (32, 32') of a blocking body (30, 30') which is substantially rotationally symmetrical about an axis (A)
1.1.2 and the first partial body (32, 32') has, remote from the container (10), a first separation plane (33)
1.1.3 and has, facing the container (10), a first surface (36) which is partly received congruently by the stationary part (20, 20'),
1.2 comprising a mobile part (40, 40') connected detachably to the stationary part (20, 20'),
1.2.1 wherein the mobile part (40, 40') mounts a second partial body (34, 34') of the blocking body (30, 30') rotatably about the axis (A)
1.2.2 and the second partial body (34, 34') has, facing the first separation plane (33), a second separation plane (35)
1.2.3 and has, remote from the first separation plane (33), a second surface (37, 37') which is at least partly received congruently by the mobile part (40, 40'),
1.3 and wherein the first partial body (32, 32') and/or the second partial body (34) has at least one recess (50, 70, 360) which has at least one opening either towards the first surface (36) or towards the second surface (37), to produce a fluid connection between the recess (50, 70, 360) and the container (10),
1.4 and comprising an actuating means (24) for changing between a starting position and a change-over position.

2. Valve (1, 1') according to claim 1, **characterised in that** the first partial body (32, 32') and the second partial body (34, 34') are in contact with one another, in particular sealing one another, particularly preferably by means of a sealing ring (60) in a region of the separation planes (33, 35) or adjacent to the separation planes (33, 35).

3. Valve (1, 1') according to either claim 1 or claim 2, **characterised in that** the first partial body (32, 32') and the second partial body (34, 34') form two halves of the blocking body (30, 30').

4. Valve (1, 1') according to any one of the preceding claims, **characterised in that** the blocking body (30, 30') is substantially a sphere.

5. Valve (1, 1') according to any one of the preceding claims, **characterised in that** journal halves (39) are formed integrally on both sides of the blocking body (30, 30') in an axial direction (A) or are attached to the blocking body (30, 30').

6. Valve (1, 1') according to any one of the preceding claims, **characterised in that** provided in the stationary part (20, 20') and in the mobile part (40, 40') are bearing elements (38) which mount the first partial body (32, 32') and the second partial body (34, 34') in the stationary part (20, 20') and in the mobile part (40, 40') such that at least in the starting position, the partial bodies (32, 32'; 34, 34') are held in the stationary part (20, 20') and in the mobile part (40, 40').

7. Valve (1, 1') according to claim 6, **characterised in that** the bearing elements (38) are configured as bush segments with an L-shaped cross section which correspond with ring segment-shaped grooves in the partial bodies (32, 34).

8. Valve (1, 1') according to any one of the preceding claims, **characterised in that** the stationary part (20, 20') and/or the mobile part (40, 40') have a locking device (42) and an arresting device (28), the locking device (42) locking the mobile part (40, 40') with the stationary part (20, 20') and the arresting device (28) blocking or releasing a rotation of the blocking body (30, 30') and the locking device (42) blocking or releasing the arresting device (28) indirectly, in particular by means of pins (27), or directly.

9. Valve (1, 1') according to any one of the preceding claims, **characterised in that** the stationary part (20, 20') and/or the mobile part (40, 40') consists at least partly of plastics material.

10. Valve (1, 1') according to any one of the preceding claims, **characterised in that** the recess (50) is a particularly cylindrical blind hole which extends radially inwards into the respective partial body (32, 32'; 34, 34') from the radially outer surface (36, 37) approximately perpendicularly to the axis (A).

11. Valve (1, 1') according to any one of the preceding claims, **characterised in that** the recess (50) has an ejector, particularly in the form of a disc (58), the ejector being movable in the recess (50) in order to eject a removed sample.

12. Valve (1, 1') according to any one of the preceding claims, **characterised in that** the recess (70) is configured as a continuous hole through one of the partial bodies (32, 32'; 34, 34') which extends approximately perpendicularly to the axis (A) and approximately parallel to one of the separation planes (33, 35).

13. Valve (1, 1') according to any one of the preceding claims, **characterised in that** the mobile part (40, 40') and/or the stationary part (20, 20') has a suction device (29), it being possible for air and bulk material to be substantially removed from a region between the mobile part (40, 40') and the stationary part (20, 20') by means of the suction device (29).

14. Valve (1, 1') according to any one of the preceding claims, **characterised in that** the mobile part (40, 40') comprises a fastening device (52, 72), remote from the stationary part (20, 20'), it being possible for the fastening device (52, 72) to be connected to a removal device (54, 74).

15. Valve (1, 1') according to claim 14, **characterised in that** the removal device (54, 74) has a vessel (56, 76).

16. Valve (1, 1') according to any one of the preceding claims, **characterised in that** the mobile part (40, 40') has a pressure valve (49), it being possible to produce a pressure compensation between the recess (50) and/or the removal device (54, 74) and the environment by means of the pressure valve (49).

17. Use of a valve according to any one of the preceding claims in processing plants.

## Revendications

1. Soupape (1, 1') permettant de prélever un échantillon à l'intérieur (11) d'un réservoir (10),
1.1 comportant une partie fixe (20, 20') pouvant être reliée rigidement au réservoir (10),
1.1.1. cette partie fixe (20, 20') logeant mobile en rotation un premier corps partiel (32, 32') d'un corps d'arrêt (30, 30') présentant essentiellement une symétrie de rotation autour d'un axe (A),
1.1.2 et le premier corps partiel (20, 20') comprenant à l'opposé du réservoir (10) une première surface de séparation (33),
1.1.3 et tournée vers le réservoir (10) une première surface (36) reçue partiellement en coïncidence par la partie fixe (20, 20'),
1.2 comportant une partie mobile (40, 40') reliée de façon amovible à la partie fixe (20, 20'),
1.2.1 la partie mobile (40, 40') logeant, mobile en rotation autour de l'axe (A) un second corps partiel (34, 34') du corps d'arrêt (30, 30'),
1.2.2 et le second corps partiel (34, 34') comprenant, tournée vers la première surface de séparation (33) une seconde surface de séparation (35),
1.2.3 et à l'opposé de la première surface de séparation (33) une seconde surface (37, 37') reçue au moins partiellement en coïncidence par la partie mobile (40, 40'),
1.3 et le premier corps mobile (32, 32') et/ou le second corps mobile (34) comprenant au moins un évidement (50, 70, 360) comportant au moins une ouverture vers la première surface (36) ou vers la seconde surface (37) pour obtenir une liaison fluidique entre l'évidement (50, 70, 360) et le réservoir (10),
1.4 et comportant un dispositif d'actionnement (24) pour permettre d'effectuer une commutation entre une position de base et une position de commutation.

2. Soupape (1, 1') conforme à la revendication 1,
**caractérisée en ce que**
le premier corps partiel (32, 32') et le second corps partiel (34, 34') sont en contact l'un avec l'autre dans la zone des surfaces de séparation (33, 35) ou à proximité des surfaces de séparation (33, 35) en particulier en étant étanches l'une par rapport à l'autre, de façon particulièrement préférentielle au moyen d'une bague d'étanchéité (60).

3. Soupape (1, 1') conforme à l'une des revendications 1 ou 2,
**caractérisée en ce que**
le premier corps partiel (32, 32') et le second corps partiel (34, 34') forment deux moitiés du corps d'arrêt (30, 30').

4. Soupape (1, 1') conforme à l'une des revendications précédentes,
**caractérisée en ce que**
le corps d'arrêt (30, 30') est essentiellement sphérique.

5. Soupape (1, 1') conforme à l'une des revendications précédentes,
**caractérisée en ce que**
des demis tourillons d'appui (39) sont formés de chaque côté dans la direction axiale (A) sur le corps d'arrêt (30, 30') ou sont fixés sur le corps d'arrêt (30, 30').

6. Soupape (1, 1') conforme à l'une des revendications précédentes,
**caractérisée en ce qu'**
il est prévu dans la partie fixe (20, 20') et dans la partie mobile (40, 40') des éléments de palier (38) qui positionnent le premier corps partiel (32, 32') et le second corps partiel (34, 34') dans la partie fixe (20, 20') et dans la partie mobile (40, 40') de sorte que, au moins dans la position de base les corps partiels (32, 32', 34, 34') sont maintenus dans la partie fixe (20, 20') ou dans la partie mobile (40, 40').

7. Soupape (1, 1') conforme à la revendication 6,
**caractérisée en ce que**
les éléments de palier (38) sont réalisés sous la forme de segments de coussinets ayant une section en forme de L correspondant à des rainures en forme de segments annulaires des corps partiels (32, 34).

8. Soupape (1, 1') conforme à l'une des revendications précédentes,
**caractérisée en ce que**
la partie fixe (20, 20') et/ou la partie mobile (40, 40') comporte(nt) un organe de verrouillage (42) et un organe d'arrêt (28), l'organe de verrouillage (42) verrouillant la pièce mobile (40, 40') avec la pièce fixe (20, 20') et l'organe d'arrêt (28) bloquant ou libérant la rotation du corps d'arrêt (30, 30'), et l'organe de verrouillage (42) bloquant ou libérant l'organe d'arrêt (28) de manière indirecte en particulier au moyen de broches (27) ou de manière directe.

9. Soupape (1, 1') conforme à l'une des revendications précédentes,
**caractérisée en ce que**
la partie fixe (20, 20') et/ou la partie mobile (40, 40') est/sont réalisées au moins partiellement en matériau synthétique.

10. Soupape (1, 1') conforme à l'une des revendications précédentes,
**caractérisée en ce que**
l'évidement (50) est un trou borgne en particulier cylindrique qui s'étend, de la surface externe radiale (36, 37), essentiellement perpendiculairement à l'axe (A) radialement vers l'avant dans les corps partiels (32, 32', 34, 34') respectifs.

11. Soupape (1, 1') conforme à l'une des revendications précédentes,
**caractérisée en ce que**
l'évidement (50) comporte un éjecteur en particulier en forme de disque (58), cet éjecteur étant mobile dans l'évidement (50) pour éjecter un échantillon ayant été prélevé.

12. Soupape (1, 1') conforme à l'une des revendications précédentes,
**caractérisée en ce que**
l'évidement (70) est réalisé sous la forme d'un perçage traversant au travers de l'un des corps partiels (32, 32', 34, 34') qui s'étend essentiellement perpendiculairement à l'axe (A) et essentiellement parallèlement à l'une des surfaces de séparation (33, 35).

13. Soupape (1, 1') conforme à l'une des revendications précédentes,
**caractérisée en ce que**
la partie mobile (40, 40') et/ou la partie fixe (20 20') comporte(nt) un organe d'aspiration (29), cet organe d'aspiration (29) permettant d'éliminer largement de l'air et des matières en vrac d'une zone comprise entre la partie mobile (40, 40') et la partie fixe (20, 20').

14. Soupape (1, 1') conforme à l'une des revendications précédentes,
**caractérisée en ce que**
la partie mobile (40, 40') comporte, à l'opposé de la partie fixe (20, 20'), un dispositif de fixation (52, 72), pouvant être relié à un dispositif de prélèvement (54, 74).

15. Soupape (1, 1') conforme à la revendication 14,
**caractérisée en ce que**
le dispositif de prélèvement (54, 74) comporte un récipient (56, 76).

16. Soupape (1, 1') conforme à l'une des revendications précédentes,
**caractérisée en ce que**
la partie mobile (20, 20') comporte une soupape de refoulement (49), permettant d'effectuer un équilibrage de pression entre l'évidement (50) et/ou le dispositif de prélèvement (54, 74) et l'environnement.

17. Utilisation d'une soupape conforme à l'une des revendications précédentes, dans des installations d'engeenering chimique.
